# EUROPÄISCHE PATENTSCHRIFT

(11) **EP 2 946 955 B1**
(45) Veröffentlichungstag und Bekanntmachung des Hinweises auf die Patenterteilung: **05.07.2017**
(21) Anmeldenummer: 15166892.8
(22) Anmeldetag: 08.05.2015
(51) Int. Cl.: B60J 5/04, B60J 10/78

(54) **ANORDNUNG AUS EINEM VERBUNDTEIL UND RAHMENTEIL EINES FAHRZEUGTÜRFENSTERS**
ASSEMBLY CONSISTING OF A COMPOSITE PART AND FRAME PART OF A VEHICLE DOOR WINDOW
SYSTÈME COMPRENANT UNE PIÈCE COMPOSITE ET UN ÉLÉMENT DE CADRE D'UNE FENÊTRE DE PORTE DE VÉHICULE

(30) Priorität: 21.05.2014 DE 102014107166
(43) Veröffentlichungstag der Anmeldung: 25.11.2015
(73) Patentinhaber: CQLT SaarGummi Technologies S.à.r.l., 5544 Remich (LU); Skoda Auto a.s., 293 60 Mladá Boleslav (CZ)
(72) Erfinder: Micout, Vincent, 66679 Losheim am See (DE); Cipra, Jaroslav, 294 11 Loukovec (CZ)
(74) Vertreter: Patentanwälte Bernhardt / Wolff Partnerschaft

(56) Entgegenhaltungen:
- EP-A1- 2 463 134
- US-A- 5 139 307

## Beschreibung

Die Erfindung betrifft eine Anordnung aus einem Verbundteil und Fensterrahmenteilen eines Fahrzeugtürfensters, an denen das Verbundteil unter Bildung einer Dichtung in seiner Gesamtheit montierbar ist, wobei das Verbundteil einen von einem oberen zu einem unteren Fensterrahmenteil verlaufenden, zur Anordnung zwischen Scheiben des Fensters vorgesehenen Steg umfasst, sowohl das Verbundteil als auch der obere Fensterrahmenteil Einrichtungen zur Herstellung einer Verbindung zwischen dem Verbundteil und dem oberen Fensterrahmenteil am oberen Ende des Steges durch ein Verbindungselement aufweist und wobei das Verbindungselement von dem Verbundteil in eine Öffnung in dem oberen Rahmenteil hinein vorsteht und bei geschlossener Fahrzeugtür ohne Kontakt zur Außenumgebung des Fahrzeugs ist.

Es sind durch Benutzung Anordnungen bekannt, bei denen in das Verbundteil neben Dichtungsstrangabschnitten eine feste Fensterscheibe integriert ist. Der vertikale Steg grenzt die feste, unbewegliche Fensterscheibe von einer beweglichen Fensterscheibe des Fahrzeugtürfensters ab.
An seiner Unterseite ist der Steg innerhalb eines durch den unteren Fensterrahmenteil gebildeten Scheibenschachtes befestigt. Zur Befestigung des Verbundteils am oberen Fensterrahmenteil dient in der bekannten Anordnung eine Schraube, die durch eine Blechlage des oberen Fensterrahmenteils hindurch von oben in einen festen Kern des Stegs eingedreht ist. Nachteilig dringt durch eine solche Schraubverbindung Feuchtigkeit und die Schraube bildet einen Korrosionsherd.

Eine Anordnung der eingangs erwähnten Art, deren Verbindungselement bei geschlossener Fahrzeugtür ohne Kontakt zur Außenumgebung des Fahrzeugs ist, geht aus der EP 2 463 134 A1 hervor. Eine Verbindung zwischen dem Verbundteil und dem oberen Fensterrahmenteil am oberen Ende des Steges ist durch ein Schraubverbindungselement hergestellt, das durch eine Durchgangsöffnung in dem Verbundteil und dem Fensterrahmenteil hindurch in ein zur Innenseite des Fahrzeugs weisendes, den Fensterrahmenteil hintergreifendes Gegenelement eingedreht ist. Ein Schraubenkopf des Schraubverbindungselemens ist der beweglichen Scheibe zugewandt.

Der Erfindung liegt die Aufgabe zugrunde, eine neue Anordnung der eingangs erwähnten Art zu schaffen, bei welcher Undichtigkeit und Korrosionsgefahr vermieden sind.

Die diese Aufgabe lösende Anordnung nach der Erfindung ist dadurch gekennzeichnet, dass die Öffnung als Langloch ausgebildet ist und das Verbundteil am oberen Ende des Steges eine hinterschnittene Führung aufweist, in welche das Verbindungselement mit einem Kopfteil einschiebbar ist.

Durch die erfindungsgemäße Abschirmung des Verbindungselements nach außen sind Nachteile des Standes der Technik hinsichtlich Dichtigkeit und Korrosion vermieden. Bei der Montage des Verbundteils an den Fensterrahmenteilen von der Fahrzeugaußenseite her kann das vorstehende Verbindungselement somit im Zuge der Montagebewegung des gesamten Verbundteils in die Öffnung in dem Fensterrahmenteil hinein geschoben werden.

Vorzugsweise rastet das Verbindungselement in der Öffnung ein.

Bei der Verbindung handelt es sich zweckmäßig um eine lösbare Verbindung, die jederzeit eine Demontage des Verbundteils, z.B. im Reparaturfall, ermöglicht.

Zweckmäßig kann das Verbindungselement auch von dem Verbundteil lösbar sein, sodass das Verbindungselement, z.B. bei Beschädigung des Verbindungselements im Rahmen einer Reparatur, austauschbar ist.

In einer Ausführungsform ist das Verbindungselement in Längsrichtung des oberen Fensterrahmenteils mit einem Kopfteil in die hinterschnittene Führung einschiebbar. Zweckmäßig ist die Öffnung als Langloch, insbesondere in der Form eines Schlüssellochs, ausgebildet und die hinterschnittene Führung verläuft parallel zur Längsrichtung des Langlochs, sodass das Langloch Freiraum für die Bewegung des Verbindungselements in der Führung bietet.

In weiterer Ausgestaltung der Erfindung ist der genannte Kopfteil in einer Drehstellung des Verbindungselements durch das Langloch hindurchführbar. Im Reparaturfall ermöglicht dies vorteilhaft das Austauschen des Verbindungselements.

Es versteht sich, dass die genannte Öffnung in dem oberen Rahmenteil, vorzugsweise eine Durchgangsöffnung in einer Blechlage des oberen Fensterrahmenteils und die Durchgangsöffnung bei geschlossener Fahrzeugtür der Fahrzeuginnenseite zugewandt ist.

Zweckmäßig weist der genannte Steg einen Kern, insbesondere einen Kunststoffkern, auf, wobei der Kern mit einer Anspritzung aus Elastomermaterial oder Kunststoff zur Verbindung mit einer festen Scheibe des Verbundteils und/oder einer solchen Anspritzung zur Bildung einer Führung einer beweglichen Scheibe des Fahrzeugfensters versehen ist.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine erfindungsgemäße Anordnung aus Fensterrahmenteilen einer Fahrzeugtür und einem an den Fensterrahmenteilen angebrachten Verbundbauteil,
- Fig. 2: das Verbundbauteil der Anordnung von Fig. 1,
- Fig. 3: ein Detail der Baugruppe von Fig. 1,
- Fig. 4: ein in der Baugruppe von Fig. 1 verwendetes Verbindungselement,
- Fig. 5: das obere Ende eines in der Baugruppe von Fig. 2 verarbeiteten vertikalen Stegs, mit dem daran angebrachten Verbindungselement von Fig. 4,
- Fig. 6: eine Fig. 3 entsprechende Darstellung zur Erläuterung der Lage einer Schnittebene, und
- Fig. 7: eine Schnittdarstellung gemäß Schnitt A-A von Fig. 6.

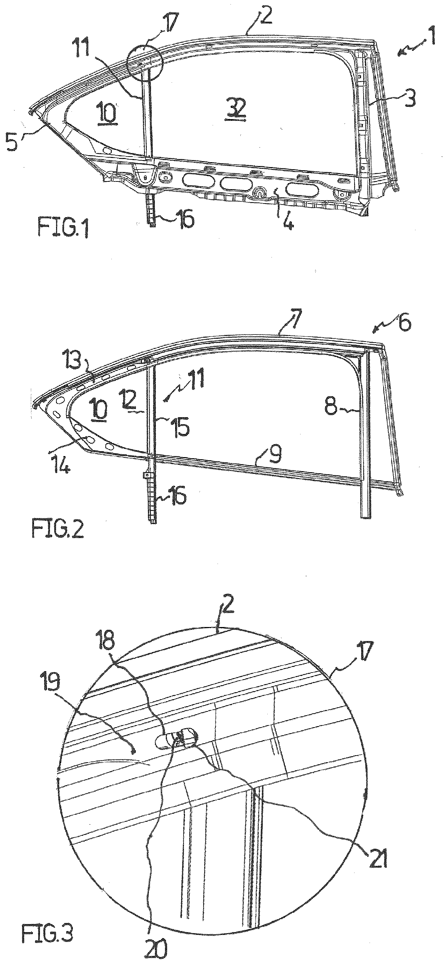

Eine in Fig. 1 gezeigte Anordnung 1 umfasst Fensterrahmenteile 2 bis 5 einer aus Blech hergestellten, in Fig. 1 abschnittsweise dargestellten Fahrzeugtür 1.

An den Fensterrahmenteilen 2 bis 5 ist von der Türaußenseite her ein in Fig. 2 gesondert dargestelltes Verbundbauteil 6 angebracht, das Dichtungsstrangabschnitte 7 bis 9 zur Abdichtung einer beweglichen Fensterscheibe 32, eine unbewegliche Fensterscheibe 10 sowie einen vertikalen Steg 11 aufweist. Der vertikale Steg 11 umfasst auf seiner der unbeweglichen Fensterscheibe 10 zugewandten Seite eine Anspritzung 12 aus Elastomermatial zur Verbindung mit der unbeweglichen Fensterscheibe 10. Letztere ist durch weitere Anspritzungsabschnitte 13 und 14 eingefasst ist. Eine Elastomeranspritzung 15 auf der der unbeweglichen Scheibe 10 abgewandten Seite des Stegs 11 dient der Abdichtung und Führung der beweglichen Fensterscheibe 32.

Am unteren Ende weist der Steg 11 Einrichtungen 16 zur Befestigung des Stegs 11 innerhalb eines Fensterschachts der Fahrzeugtür 1 auf. Bei 17 ist eine weiter unten näher erläuterte Verbindung zwischen dem Verbundbauteil 6 und dem oberen Fensterrahmenteil 2 hergestellt. Das Verbundbauteil 6 ist mit dem oberen Fensterrahmenteil 2 ferner über den Dichtungsstrangabschnitt 7 und den Anspritzungsabschnitt 13 verbunden, wobei die betreffenden Abschnitte 7,13 auf einen Karosserieflansch an dem oberen Fensterrahmenteil 2 aufgesteckt sind.

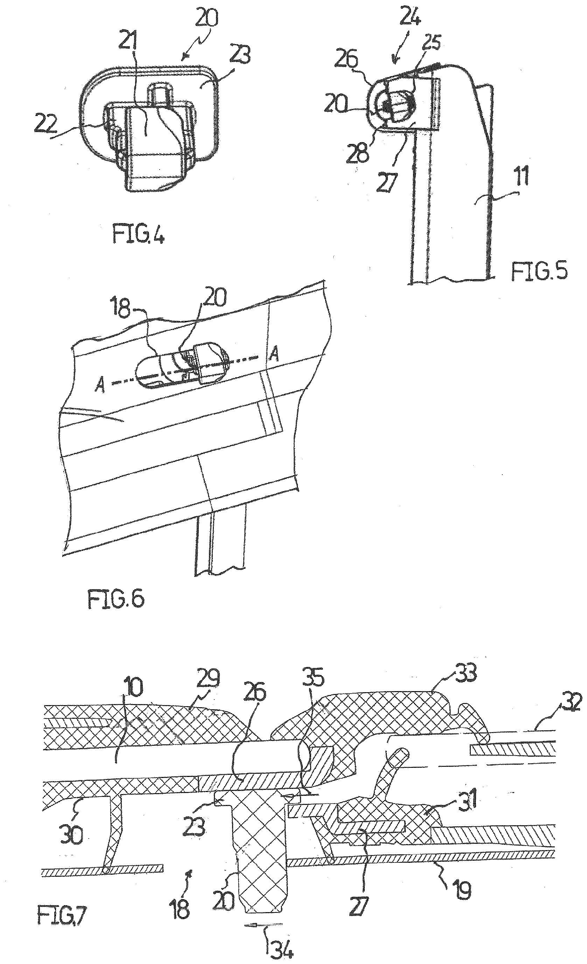

Wie aus Fig. 3 hervorgeht, umfasst die Verbindung 17 ein Langloch 18 in einer Blechlage 19 des oberen Fensterrahmenteils 2. Durch das Langloch 18 hindurch ist ein in Fig. 4 gesondert dargestelltes Verbindungselement 20 geführt, welches mit einem aufgeweiteten, keilförmigen Fußteil 21 das Langloch 18 widerhakenartig hintergreift.

Das Verbindungselement 20 lässt sich, wie weiter unten erläutert ist, an dem Verbundbauteil 6 befestigen, sodass es bei der Montage des Verbundbauteils 6 an den Fensterrahmenteilen 2 bis 5 von dem Verbundbauteil 6 vorsteht. Beim Eintritt durch das Langloch 18 biegen sich Schenkel des keilförmigen Fußteils 21 ab und rasten hinter der Blechlage 19 des oberen Fensterrahmenteils 2 ein.

Wie Fig. 4 erkennen lässt, weist das Verbindungselement 20 neben dem Fußteil 21 und einem Stiftabschnitt 22 einen plattenförmigen Kopfteil 23 auf.

Gemäß Fig. 5 lässt sich das Verbindungselement 20 in eine an dem Steg 11 gebildete Führung 24 aus Kunststoffteilen 26,27 einschieben, welche mit einem die Anspritzungen 12,15 tragenden Kunststoffkern des Stegs 11 verbunden sind. Die Führung 24 umfasst ein erstes plattenförmiges Kunststoffteil 26, gegen welches der Kopfteil 23 des Verbindungselements 20 mit einer Plattenfläche anliegt. Ein zweites Kunststoffteil 27 weist kurze vorstehende U-Schenkel 25 auf, die Begrenzungen bilden, zwischen welchen der Kopfteil 23 geführt ist. Das Verbindungselement 20 ragt durch eine Ausnehmung 28 in dem zweiten Kunststoffteil 27, welches den Kopfteil 23 übergreift.

Fig. 7 zeigt einen etwa horizontalen Schnitt gemäß Schnittlinie A-A von Fig. 6. Erkennbar sind das geschnittene Verbindungselement 20, das durch das Langloch 18 in der Blechlage 19 hindurchgeführt ist. Ferner erkennbar sind Schnitte der die Führung 24 bildenden Kunststoffteile 26 und 27. Die Kunststoffteile 26 und 27 sind mit Anspritzungen 29,30 zur Verbindung mit der unbeweglichen Fensterscheibe 10 sowie Anspritzungen 31 und 33 der bei 32 angedeuteten beweglichen Fensterscheibe verbunden.

Durch Verschieben des Verbindungselements 20 gemäß Pfeilen 34 und 35 lässt sich die durch das Verbindungselement 20 hergestellte Verbindung lösen, indem das Verbindungselement 20 aus der Führung 24 heraus und innerhalb des Langlochs 18 verschoben wird. Das aus der Führung 24 herausgeschobene Verbindungselement 20 lässt sich entfernen, wobei der Kopfteil 23 in einer Drehposition, in der seine Längsseiten zu den Längsseiten des Langlochs 18 parallel ausgerichtet sind, durch das Langloch 18 hindurchtritt.

## Patentansprüche

1. Anordnung aus einem Verbundteil (6) und Fensterrahmenteilen (2-5) eines Fahrzeugtürfensters, an denen das Verbundteil (6) unter Bildung einer Dichtung in seiner Gesamtheit montierbar ist, wobei das Verbundteil (6) einen von einem oberen zu einem unteren Fensterrahmenteil (2,4) verlaufenden, zur Anordnung zwischen Scheiben (10,32) des Fensters vorgesehenen Steg (11) umfasst, sowohl das Verbundteil (6) als auch der obere Fensterrahmenteil (2) Einrichtungen zur Herstellung einer Verbindung (17) zwischen dem Verbundteil (6) und dem oberen Fensterrahmenteil (2) am oberen Ende des Steges (11) durch ein Verbindungselement (20) aufweist und wobei das Verbindungselement (20) von dem Verbundteil (6) in eine Öffnung (18) in dem oberen Rahmenteil (2) hinein vorsteht und bei geschlossener Fahrzeugtür ohne Kontakt zur Außenumgebung des Fahrzeugs ist,
**dadurch gekennzeichnet,**
**dass** die Öffnung (18) als Langloch ausgebildet ist und das Verbundteil (6) am oberen Ende des Steges (11) eine hinterschnittene Führung (24) aufweist, in welche das Verbindungselement (20) mit einem Kopfteil (23) einschiebbar ist.

2. Anordnung nach Anspruch 1,
**dadurch gekennzeichnet,**
**dass** das Verbindungselement (20) in der Öffnung (18) eingerastet ist.

3. Anordnung nach Anspruch 1 oder 2,
**dadurch gekennzeichnet,**
**dass** die Verbindung (17) lösbar ist.

4. Anordnung nach einem der Ansprüche 1 bis 3,
**dadurch gekennzeichnet,**
**dass** das Verbindungselement (20) von dem Verbundteil (6) lösbar ist.

5. Anordnung nach einem der Ansprüche 1 bis 4,
**dadurch gekennzeichnet,**
**dass** die Öffnung (18) in der Form eines Schlüssellochs ausgebildet ist.

6. Anordnung nach einem der Ansprüche 1 bis 5,
**dadurch gekennzeichnet,**
**dass** das Verbindungselement (20) mit einem Kopfteil (23) parallel zu dem oberen Fensterrahmenteil (2) in die Führung (24) einschiebbar ist.

7. Anordnung nach Anspruch 6,
**dadurch gekennzeichnet,**
**dass** die hinterschnittene Führung (24) parallel zur Längsrichtung des Langlochs (18) verläuft.

8. Anordnung nach Anspruch 6 oder 7,
**dadurch gekennzeichnet,**
**dass** der Kopfteil (23) in wenigstens einer Drehstellung des Verbindungselements (20) durch das Langloch (18) hindurchführbar ist.

9. Anordnung nach einem der Ansprüche 1 bis 8,
**dadurch gekennzeichnet,**
**dass** der Steg (11) einen Kern, insbesondere Kunststoffkern, sowie eine Anspritzung (12) aus Elastomermaterial oder Kunststoff, z.B. PVC, zur Verbindung mit einer festen Scheibe (10) des Verbundteils (6) und/oder eine solche Anspritzung (15) zur Bildung einer Führung einer beweglichen Scheibe (32) des Fahrzeugfensters aufweist.

## Claims

1. Assembly comprising a composite part (6) and window frame parts (2-5) of a vehicle door window, on which the composite part (6) can be mounted in its entirety, forming a seal, the composite part (6) comprising a strut (11) extending from an upper to a lower window frame part (2, 4) and to be arranged between panes (10, 32) of the window, both the composite part (6) and the upper window frame part (2) having devices for producing a connection (17) between the composite part (6) and the upper window frame part (2) at the upper end of the strut (11) by means of a connecting element (20), and the connecting element (20) projecting from the composite part (6) into an opening (18) in the upper frame part (2) and, when the vehicle door is closed, having no contact with the outer surroundings of the vehicle,
**characterized in that**
the opening (18) is formed as an elongated hole and the composite part (6) has an undercut guide (24) at the upper end of the strut (11), into which guide a top part (23) of the connecting element (20) can be pushed.

2. Assembly according to Claim 1,
**characterized in that**
the connecting element (20) is latched into the opening (18).

3. Assembly according to Claim 1 or 2,
**characterized in that**
the connection (17) is detachable.

4. Assembly according to one of Claims 1 to 3,
**characterized in that**
the connecting element (20) can be detached from the composite part (6).

5. Assembly according to one of Claims 1 to 4,
**characterized in that**
the opening (18) is formed in the shape of a keyhole.

6. Assembly according to one of Claims 1 to 5,
**characterized in that**
the connecting element (20) can be inserted into the guide (24) with a top part (23) parallel to the upper window frame part (2).

7. Assembly according to Claim 6,
**characterized in that**
the undercut guide (24) extends parallel to the longitudinal direction of the elongated hole (18).

8. Assembly according to Claim 6 or 7,
**characterized in that**
the top part (23) can be led through the elongated hole (18) in at least one rotational position of the connecting element (20).

9. Assembly according to one of Claims 1 to 8,
**characterized in that**
the strut (11) has a core, in particular a plastic core, and an applied injection moulding (12) of elastomer material or plastic, e.g. PVC, for connection to a fixed pane (10) of the composite part (6) and/or such an applied injection moulding (15) for forming a guide of a movable pane (32) of the vehicle window.

## Revendications

1. Ensemble constitué par une pièce composite (6) et des parties (2-5) de cadre de fenêtre d'une fenêtre de porte de véhicule, dans lesquelles la pièce composite (6) peut être montée dans sa totalité avec formation d'une étanchéité, la pièce composite (6) comprenant une âme (11) s'étendant d'une partie supérieure jusqu'à une partie inférieure (2,4) de cadre de fenêtre, destinée à être disposée entre des vitres (10,32) de la fenêtre, la pièce composite (6) ainsi que la partie supérieure (2) de cadre de fenêtre comprenant des dispositifs pour la réalisation d'une liaison (17) entre la pièce composite (6) et la partie supérieure (2) de cadre de fenêtre au niveau de l'extrémité supérieure de l'âme (11) par un élément de liaison (20) et l'élément de liaison (20) étant en saillie par rapport à la pièce composite (6) et pénétrant dans une ouverture (18) dans la partie supérieure (2) de cadre et ne présentant pas de contact, lorsque la porte de véhicule est fermée, avec l'environnement externe du véhicule, **caractérisé en ce que** l'ouverture (18) est réalisée sous forme d'un trou longitudinal et la pièce composite (6) présente en l'extrémité supérieure de l'âme (11) un dispositif de guidage (24) en contre-dépouille, dans lequel l'élément de liaison (20) peut être introduit avec une partie de tête (23).

2. Ensemble selon la revendication 1, **caractérisé en ce que** l'élément de liaison (20) est encliqueté dans l'ouverture (18).

3. Ensemble selon la revendication 1 ou 2, **caractérisé en ce que** la liaison (17) est amovible.

4. Ensemble selon l'une quelconque des revendications 1 à 3, **caractérisé en ce que** l'élément de liaison (20) peut être séparé de la pièce composite (6).

5. Ensemble selon l'une quelconque des revendications 1 à 4, **caractérisé en ce que** l'ouverture (18) est réalisée sous forme d'un trou de serrure.

6. Ensemble selon l'une quelconque des revendications 1 à 5, **caractérisé en ce que** l'élément de liaison (20) peut être introduit avec une partie de tête (23) parallèlement à la partie supérieure (2) de cadre de fenêtre dans le dispositif de guidage (24).

7. Ensemble selon la revendication 6, **caractérisé en ce que** le dispositif de guidage (24) en contre-dépouille s'étend parallèlement à la direction longitudinale du trou longitudinal (18).

8. Ensemble selon la revendication 6 ou 7, **caractérisé en ce que** la partie de tête (23) peut être guidée à travers le trou longitudinal (18) dans au moins une position de rotation de l'élément de liaison (20).

9. Ensemble selon l'une quelconque des revendications 1 à 8, **caractérisé en ce que** l'âme (11) présente un noyau, en particulier un noyau en matériau synthétique, ainsi qu'une pièce moulée par injection (12) en matériau élastomère ou en matériau synthétique, par exemple en PVC, pour la liaison avec une vitre fixe (10) de la pièce composite (6) et/ou une pièce moulée par injection (15) pour la formation d'un dispositif de guidage d'une vitre mobile (32) de la fenêtre de véhicule.
